# FASCICULE DE BREVET EUROPEEN

(11) **EP 2 588 718 B1**
(45) Date de publication et mention de la délivrance du brevet: **22.11.2017**
(21) Numéro de dépôt: 11741633.9
(22) Date de dépôt: 01.07.2011
(51) Int. Cl.: F01D 21/00, F01D 21/02, F01D 21/04, F02C 3/10, B64C 27/12, G01L 3/04

(54) **DETECTION DE SURVITESSE D'UNE TURBINE LIBRE PAR MESURE SUR COUPLEMETRE**
ÜBERGESCHWINDIGKEITSDETEKTION EINER FREIEN ARBEITSTURBINE MITTELS EINES DREHMOMENTMESSERS
OVERSPEED DETECTION ON A FREE TURBINE USING A TORQUEMETER

(30) Priorité: 02.07.2010 FR 1055350
(43) Date de publication de la demande: 08.05.2013
(73) Titulaire: Safran Helicopter Engines, 64510 Bordes (FR)
(72) Inventeur: FREALLE, Jean-Luc, Charles, Gilbert, F-64000 Pau (FR); PERBOS, Alain, Michel, F-64320 Idron (FR)
(74) Mandataire: Gevers & Orès
(86) Numéro de dépôt international: PCT/FR2011/051558
(87) Numéro de publication internationale: WO 2012/001334

(56) Documents cités:
- BE-A- 702 158
- FR-A1- 2 931 552
- GB-A- 946 140
- US-A- 2 912 822
- US-A- 5 363 317
- US-A1- 2008 041 141

## Description

Le domaine de la présente invention est celui des turbomachines et plus particulièrement de la sécurisation des turbines libres des turbomoteurs.

Les turbomoteurs sont couramment employés pour la propulsion des aéronefs et en particulier pour la propulsion et la sustentation des hélicoptères. Ces moteurs comprennent un générateur de gaz constitué entre autres, le long d'un arbre moteur, d'un ou plusieurs compresseurs, d'une chambre de combustion annulaire entourant l'arbre et d'une ou plusieurs turbines, dites turbines liées, qui entraînent le ou les compresseurs par l'intermédiaire de l'arbre moteur. Les gaz en sortie de ce générateur sont ensuite envoyés sur une roue de turbine, dite turbine libre, qui est associée à un arbre de puissance, distinct de l'arbre moteur du générateur, et qui fournit la puissance utile pour la propulsion et/ou la sustentation. L'ensemble des éléments en aval de la chambre de combustion, chambre et turbine libre comprises, sont dénommées parties chaudes, les autres étant a contrario considérées comme des parties froides.

Lors de la conception d'un turbomoteur il convient de prendre en compte le risque d'une rupture de l'arbre de la turbine libre, car dans ces conditions la puissance fournie par les gaz à la turbine n'est plus absorbée par les équipements entraînés par cet arbre et la vitesse de rotation de la turbine libre s'accroit de façon extrêmement rapide. Une telle survitesse aboutit très rapidement à une rupture des aubes et/ou à leur séparation d'avec le disque de turbine. Ces aubes sont projetées violemment vers l'extérieur du fait de la force centrifuge et peuvent traverser le carter entourant la turbine, provoquant des dégâts très importants dans le moteur, et pouvant même mettre en danger l'aéronef et ses passagers.

Les concepteurs de moteurs d'aéronefs sont donc tenus de prévenir les conséquences d'une telle survitesse. Une façon courante d'assurer la protection demandée est de monter autour de la turbine un anneau de rétention qui soit capable d'absorber l'énergie des aubes qui se détacheraient et d'assurer leur confinement à l'intérieur du moteur. Un tel dispositif se traduit bien évidemment par une masse importante.

Des dispositifs de détection de la survitesse ont été évalués, à partir d'un ou plusieurs capteurs de la vitesse de rotation de la roue de turbine et d'une unité de traitement de signal, ou de tout autre système logique programmable, qui agit, lorsqu'une survitesse se déclenche, sur la régulation du générateur de gaz pour réduire ou couper le débit carburant injecté. Appliqué sur un moteur ne disposant pas d'anneau de rétention, ce dispositif doit couvrir la rupture d'arbre interne au moteur. L'inconvénient est qu'il nécessite alors de positionner un capteur au voisinage de la turbine libre, c'est-à-dire dans une enceinte où la température est particulièrement élevée. Il n'est en effet pas possible de positionner le capteur de vitesse sur l'extrémité de l'arbre opposée à la turbine libre car il ne détecterait pas une rupture de l'arbre si celle-ci se produisait entre la turbine libre et la position du capteur. Outre le fait que les problèmes d'installation de ces capteurs dans les enceintes chaudes sont particulièrement complexes, les capteurs utilisés subissent des conditions d'environnement défavorables pour une fonction où l'exigence de fiabilité est très forte. L'environnement de fonctionnement n'étant pas favorable à leur fiabilité et à leur durée de vie, le problème de disponibilité de la fonction de sécurité peut se poser du fait de la fiabilité insuffisante des capteurs.

On connait des dispositifs de détection d'une survitesse par la mesure du couple qu'exerce la turbine d'une turbomachine, comme par exemple dans les demandes de brevet US 2912822 ou US 5363317, ou encore dans la demande de brevet FR 2931552 de la demanderesse. Ces dispositifs ont pour inconvénients de décrire soit des dispositifs mécaniques pour une mesure de couple dont les temps de réaction, bien que non précisés, sont relativement longs du fait de la technologie employée, soit des dispositifs utilisant une mesure de vitesse. Ils ne sont pas bien adaptés à la détection d'une survitesse sur une turbine libre, qui s'emballerait de façon explosive dans le cas de la rupture de l'arbre qu'elle entraîne, si la détection n'avait pas lieu dans des délais extrêmement courts.

Le système de détection d'une survitesse de la turbine libre d'un moteur d'hélicoptère doit couvrir, essentiellement, 3 types d'événements :
- l'emballement du moteur délivrant sans contrôle une puissance excédent la puissance nécessaire,
- la rupture, externe au moteur, de l'accouplement avec la chaîne cinématique hélicoptère,
- la rupture, interne au moteur, de l'accouplement entre la turbine libre et l'arbre de sortie. Par rupture d'arbre interne au moteur, il faut envisager la rupture entre la turbine libre et le couplemètre, mais aussi la rupture de l'arbre couplemètre lui-même.

Les deux premiers cas peuvent généralement être traités par la surveillance directe de la vitesse de l'arbre de sortie. En revanche le troisième ne peut l'être sans une implantation de mesure en partie chaude.

L'art antérieur comprend en outre le document GB-A-946140.

La présente invention a pour but de remédier à ces inconvénients en proposant un dispositif de prévention de la survitesse de la turbine libre en cas de la rupture de son arbre, qui ne présente pas certains des inconvénients de l'art antérieur et qui permette une réduction très rapide du débit carburant qui est injecté dans le générateur de gaz, lors de la survenance d'un tel incident.

A cet effet, l'invention a pour objet un turbomoteur selon les caractéristiques de la revendication 1. Ce turbomoteur inclut un dispositif de protection contre la survitesse d'une turbine libre du turbomoteur, ledit dispositif comprenant au moins un moyen de mesure du couple supporté par un arbre de sortie couplé mécaniquement à ladite turbine libre et une unité de traitement de signal apte à transmettre un ordre de réduction du débit de carburant injecté au système de régulation du turbomoteur en cas de détection d'une chute du couple en dessous d'une valeur consigne, caractérisé en ce que la mesure du couple utilisée pour le déclenchement de ladite réduction est réalisée lors d'une rotation correspondant à une fraction de tour dudit arbre de sortie.

L'utilisation d'un dispositif couplemètre, qui délivre des signaux permettant d'obtenir simultanément la vitesse de l'arbre et le couple transmis et qui se caractérise par un temps de réaction extrêmement rapide, permet une détection quasi instantanée de la rupture de l'arbre interne de turbine et donc de pouvoir intervenir, par la régulation, avant que la turbine libre n'ait atteint une vitesse de rotation prohibitive. On peut noter, à cette occasion, que le couplemètre permet également de réaliser la mesure de vitesse de l'arbre.

Avantageusement le moyen de mesure est un couplemètre à roues phoniques, la fraction de tour étant définie par le secteur compris entre deux dents consécutives de ladite roue phonique.

Dans un premier mode de réalisation ladite mesure du couple est mise à jour sur chaque nouvelle fraction de tour. On obtient ainsi une information de dynamique de couple extrêmement rapide, qui est adaptée à la détection d'une survitesse à partir d'un fort régime.

Avantageusement la réduction de débit n'est déclenchée que si la valeur de couple chute en dessous d'une première valeur consigne dans un premier intervalle de temps prédéfini.

De façon encore plus avantageuse le premier intervalle de temps est inférieur ou égal à 5 ms.

Préférentiellement ladite unité de traitement ne déclenche ladite réduction de débit dans ce premier mode de réalisation que si la puissance mesurée est supérieure ou égale à sensiblement 50% de la puissance maximale au décollage.

Avantageusement le moyen de mesure du couple comporte deux couplemètres à roues phoniques et à dents non entrelacées et ladite unité de traitement déclenche en outre une réduction de débit en cas de détection d'une différence de vitesse entre les deux roues phoniques.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique en coupe d'un turbomoteur à turbine libre, avec réducteur, équipé d'un couplemètre selon l'invention ;
- la figure 2 est une vue schématique en coupe d'un turbomoteur à turbine libre, sans réducteur, équipé d'un couplemètre selon l'invention ;
- la figure 3 est une vue schématique donnant l'évolution en fonction du temps du couple mesuré sur l'arbre de sortie de puissance du turbomoteur, par une première méthode de mesure selon l'invention, lors de la rupture de l'arbre de la turbine libre, le turbomoteur étant à puissance élevée ;
- la figure 4 est une vue schématique donnant l'évolution en fonction du temps du couple mesuré sur l'arbre de sortie de puissance du turbomoteur, par une seconde méthode de mesure selon l'invention, lors de la rupture de l'arbre de la turbine libre, le turbomoteur fonctionnant à une puissance intermédiaire.

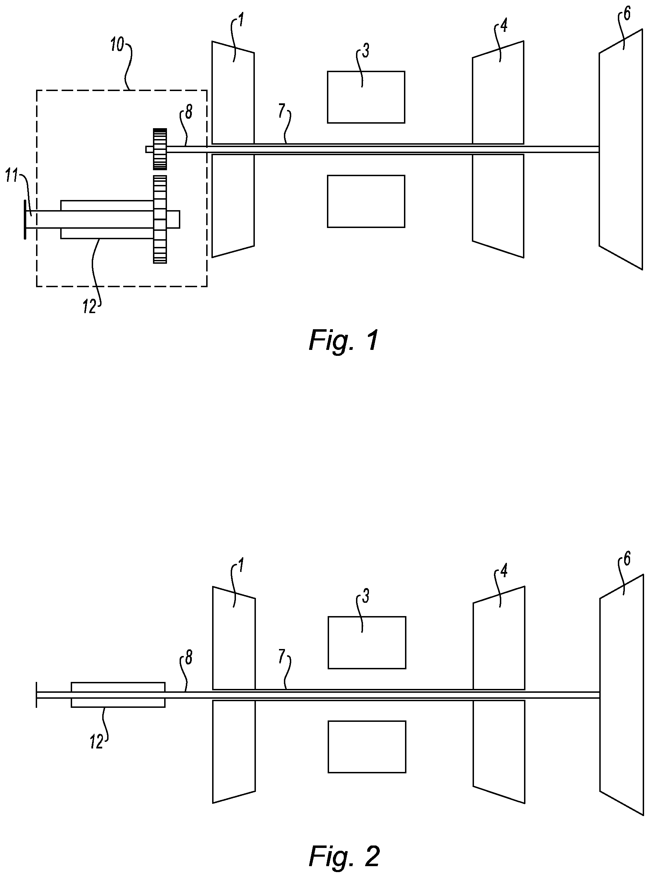

En se référant à la figure 1, on voit un turbomoteur comprenant classiquement un compresseur 1, une chambre de combustion 3, à partir de laquelle les gaz sont éjectés dans une turbine liée 4. La turbine liée est reliée rigidement au compresseur par un arbre 7, dit arbre moteur. En sortie de la turbine liée, les gaz sont envoyés sur une turbine libre 6, sur laquelle est monté un arbre de puissance 8 qui revient vers l'amont du turbomoteur en passant à travers l'arbre moteur 7.

Dans l'exemple présenté sur la figure 1 l'arbre de puissance 8 pénètre dans une boîte d'engrenages où il entraîne plusieurs accessoires par l'intermédiaire d'arbres d'entrainement spécifiques et, dans le cas représenté d'un hélicoptère, via un module réducteur 10 intégré au moteur, d'où part un arbre d'entrainement de la chaîne cinématique de l'hélicoptère, dit arbre de sortie 11.

Sur cet arbre de sortie 11 est monté un couplemètre 12, représenté de façon schématique sur la figure 1, qui mesure en permanence la valeur du couple transmis par la turbine libre 6 à cet arbre de sortie 11. Il est associé à une unité de traitement de signal montée dans un boîtier de calcul (non représenté) et destinée à donner l'alerte à partir du couple mesuré, en cas de rupture de l'arbre de puissance 8. Ce couplemètre peut être un couplemètre classique à jauges de contraintes ou préférentiellement un couplemètre fonctionnant à partir de la mesure du déphasage existant entre deux roues phoniques qui sont placées de part et d'autre d'une partie flexible en torsion de l'arbre de sortie 11. Un tel couplemètre peut être un couplemètre dit à dents entrelacées, avec une seule roue phonique, ou bien à dents non entrelacées, avec deux roues phoniques positionnées aux deux extrémités d'une partie de l'arbre susceptible de se déformer en torsion (dite arbre couplemètre). Tel que représenté, le couplemètre 12 est à dents entrelacées et est positionné sur l'arbre de sortie 11 au niveau du pignon, dit de sortie, par lequel l'arbre de puissance 8 entraîne l'arbre de sortie 11.

La figure 2 représente une configuration analogue à celle de la figure 1, dans laquelle l'invention est appliquée sur un moteur sans réducteur, avec le couplemètre directement monté sur l'arbre de puissance 8. Les éléments identiques à ceux de la figure 1 sont affectés des mêmes références et ne sont pas décrits à nouveau.

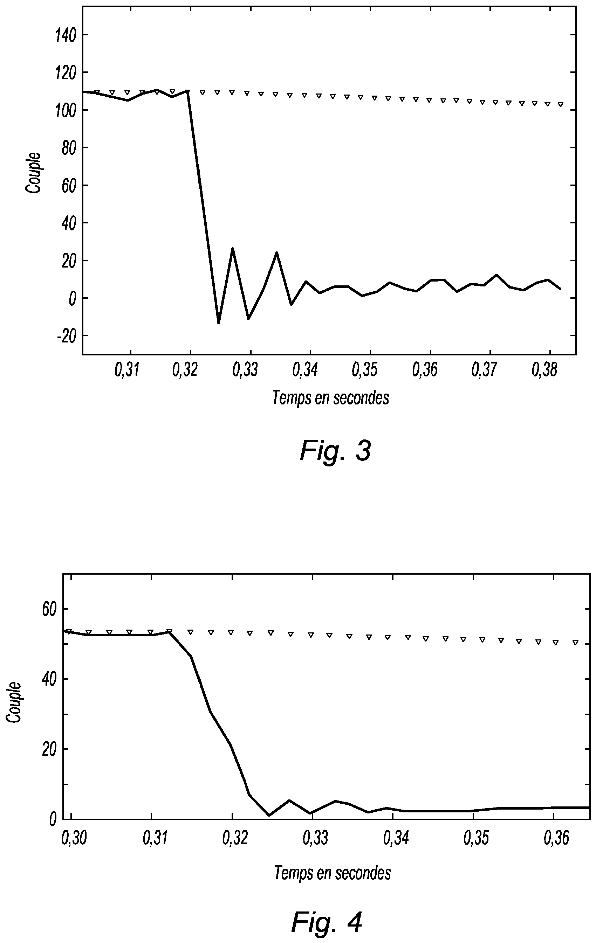

Sur les figures 3 et 4 sont représentées en trait plein, les évolutions, en fonction du temps, du couple mesuré par le couplemètre 12, lors de la rupture de l'arbre de puissance 8. Sur la figure 3 le générateur de gaz est, avant la rupture, à un point de puissance élevé, proche de la puissance maximale au décollage (PMD). Sur la figure 4 le générateur de gaz est, avant la rupture, à une puissance intermédiaire, comprise entre 25 et 50 % de la puissance maximale PMD. Les figures montrent également une courbe en pointillés donnant les valeurs de couple, disponibles dans le calculateur de régulation du turbomoteur. Ces valeurs sont utilisées pour l'indication sur le fonctionnement du moteur fournie au pilote et pour la régulation du turbomoteur et ne sont pas utilisables pour la détection d'une rupture d'arbre ; la recherche de précision conduit en effet à une dynamique de mesure plus lente, à cause du temps d'intégration et de filtrage. On voit que ces valeurs ne décroissent pas suffisamment rapidement pour pouvoir servir de détecteur d'une rupture de l'arbre de puissance 8.

Sur la figure 3 la courbe en trait plein représente le dépouillement des mesures de déphasage réalisée sur le passage de trois dents consécutives sur les deux roues phoniques, ce qui correspond, dans notre exemple avec des roues phoniques comportant chacune 4 dents, à une rotation d'un quart de tour de l'arbre. On notera que la mesure sur trois dents consécutives est la plus rapide que l'on puisse faire. La fraction de tour sur laquelle est effectuée la mesure est définie ici par le secteur angulaire existant entre deux dents consécutives d'une des deux roues phoniques. Sur la figure 4 la courbe en trait plein représente cette fois-ci le dépouillement des mesures effectuées en mesure glissante sur un tour complet de l'arbre, la mesure étant remise à jour à chaque quart de tour.

Sur l'exemple de la figure 3, on constate que le couple mesuré diminue très brutalement et que sa valeur, mesurée sur un quart de tour, atteint une valeur minimale après un temps d'environ 5 ms. La valeur mesurée fluctue ensuite aux environs de cette valeur minimale, avec des oscillations de relaxation correspondant à la réponse en torsion de la ligne d'arbre restant solidaire du couplemètre 12. Cette valeur de 5 ms est suffisamment faible pour pouvoir être compatible des exigences de temps de réponse pour un dispositif de mise en sécurité du moteur après une rupture de l'arbre de puissance 8. L'information est alors envoyée, via l'unité de traitement ad hoc, au système de régulation du turbomoteur pour lui faire brutalement réduire la quantité de carburant injecté. La réduction quasi-immédiate de la puissance transmise à la turbine libre empêche celle-ci de partir dans une survitesse prononcée. La vitesse de rotation maximale atteinte après la rupture restant limitée, la tenue mécanique des aubes peut être garantie par un simple dimensionnement approprié de leurs attaches, ou à défaut ne nécessiter qu'un anneau de rétention d'un poids limité.

On constate sur la figure 4 que le temps que met la mesure de couple pour atteindre sa valeur minimale est d'environ 10 ms. On constate également que le niveau des oscillations après l'atteinte du premier niveau minimum est d'une ampleur relative nettement inférieure à celles observées sur la figure 3. Le rapport entre l'amplitude des oscillations mesurées et la valeur dont se réduit le couple pour atteindre sa première valeur minimale après la rupture de l'arbre est, dans ce dernier cas, nettement réduit par rapport au cas précédent. Le temps de détection est alors plus long, mais ceci est tout à fait acceptable car appliqué pour des puissances intermédiaires.

A la lumière de ces constatations, l'invention définit des règles pour la détection d'une rupture d'arbre, en distinguant le cas du fonctionnement du turbomoteur à une puissance élevée (prise a priori comme supérieure à 50 % de la PMD, sans que cette valeur soit impérative) et celui d'un fonctionnement à une valeur intermédiaire (entre 25 et 50% de la PMD).

Dans le premier cas le dispositif chargé d'assurer la détection de rupture surveille l'évolution du couple avec une mesure sur la fraction de tour minimale permettant l'extraction d'une mesure. La rupture est déclarée lorsque, le turbomoteur étant toujours régulé pour cette puissance élevée, le couple mesuré passe en dessous d'un seuil prédéfini dans une fenêtre de temps donnée. Ce seuil de détection est fixé, avec des marges adaptées, à une valeur suffisamment éloignée de la valeur de départ pour assurer une détection fiable et une valeur suffisamment proche pour éviter les perturbations liées aux oscillations de relaxation.

Dans le cas d'un fonctionnement en régime intermédiaire le rebond sur la valeur du couple, que l'on observe après la première valeur minimale atteinte, conduirait à un écart trop faible pour qu'on puisse définir un seuil de détection fiable si l'on conservait la même règle et la même méthode de mesure du couple. L'invention retient alors, pour les cas de fonctionnement aux régimes intermédiaires, une valeur du couple calculée sur la base de la moyenne des valeurs relevées, par mesure glissante sur un tour de l'arbre, la valeur mesurée étant remise à jour à chaque nouvelle fraction de tour permettant d'obtenir une nouvelle information de déphasage. Le rebond dans ce cas étant plus faible que précédemment il est possible de définir, comme dans le cas précédent, un seuil de détection qui garantisse la réalité d'une rupture, sans fausse alarme.

La conséquence de l'utilisation de cette méthode, en lieu et place de la méthode utilisée aux fortes puissances, est que la valeur seuil est atteinte plus tard que dans le cas précédent (10 ms au lieu de 5). Mais la puissance mise en jeu dans ce cas étant plus faible, l'accélération angulaire de la turbine libre après la rupture est réduite d'autant. La survitesse qui s'ensuit est alors suffisamment limitée pour que la tenue mécanique de la turbine reste garantie malgré ce léger retard sur la détection de la rupture.

Il est possible de mettre en place également une surveillance pour les faibles régimes (inférieurs à 25% de la PMD) en établissant, par exemple, une loi théorique, a priori sensiblement linéaire, qui donne le couple minimum appliqué sur l'arbre de sortie 11, en fonctionnement normal, en fonction de la vitesse de rotation du générateur de gaz, puis à partir de cette courbe de définir une courbe décalée vers le bas d'un écart acceptable afin de constituer un seuil de détection d'une rupture. Si le couple mesuré passe en dessous de ce seuil c'est qu'une rupture s'est produite et qu'il convient d'envoyer au calculateur de la régulation du générateur de gaz un signal d'alerte pour qu'il réduise la quantité de carburant injecté.

Une telle méthode se traduit inévitablement par l'introduction dans le programme de calcul du déclenchement d'une alerte, de délais de détection supérieurs à ceux observés avec les méthodes décrites pour les puissances fortes et intermédiaires. Mais, là encore, la puissance de départ étant faible la survitesse qu'attendra la turbine libre sera très limitée et restera compatible des mesures prises par ailleurs pour en garantir la tenue mécanique.

Il est possible, à titre de variante, de remplacer les seuils en niveau de couple décrits ci-dessus par des seuils en gradients de décroissance du couple à partir de la valeur avant rupture.

Dans un mode de réalisation particulier de l'invention, le couplemètre 12 retenu est un couplemètre à deux roues phoniques et à dents non entrelacées, chaque roue étant solidaire de l'extrémité de l'arbre couplemètre. Dans cette variante la détection de rupture de l'arbre couplemètre lui-même est assurée par la détection d'une différence de vitesse entre les deux roues phoniques.

## Revendications

1. Turbomoteur comportant un générateur de gaz comprenant au moins un compresseur (1), une chambre de combustion (3), au moins une turbine liée (4) et un système de régulation du carburant injecté dans ladite chambre de combustion, le turbomoteur comprenant en outre une turbine libre, les gaz issus dudit générateur étant envoyés sur ladite turbine libre (6), et un dispositif de protection contre la survitesse de ladite turbine libre (6), ledit dispositif comprenant au moins un moyen de mesure du couple (12) supporté par un arbre de sortie (8, 11) couplé mécaniquement à ladite turbine libre et une unité de traitement de signal configurée pour transmettre un ordre de réduction du débit de carburant injecté au système de régulation du turbomoteur,
**caractérisé en ce que** l'unité de traitement de signal est configurée pour transmettre un ordre de réduction du débit de carburant en cas de détection d'une chute du couple en dessous d'une première valeur consigne, ledit moyen de mesure étant configuré pour réaliser la mesure du couple utilisée pour le déclenchement de ladite réduction lors d'une rotation correspondant à une fraction de tour dudit arbre de sortie (8, 11).

2. Turbomoteur selon la revendication 1 dans lequel le moyen de mesure est un couplemètre à roues phoniques (12), la fraction de tour étant définie par le secteur compris entre deux dents consécutives d'une des deux dites roues phoniques.

3. Turbomoteur selon l'une des revendications 1 ou 2 dans lequel ladite mesure du couple est mise à jour sur chaque nouvelle fraction de tour.

4. Turbomoteur selon la revendication 3 dans lequel la réduction de débit n'est déclenchée que si la valeur de couple chute en dessous d'une première valeur consigne dans un premier intervalle de temps prédéfini.

5. Turbomoteur selon la revendication 4 dans lequel le premier intervalle de temps est inférieur ou égal à 5 ms.

6. Turbomoteur selon l'une des revendications 3 à 5 dans lequel ladite unité de traitement ne déclenche ladite réduction de débit que si la puissance mesurée est supérieure ou égale à sensiblement 50% de la puissance maximale au décollage.

7. Turbomoteur selon la revendication 1 dans lequel le moyen de mesure du couple comporte un couplemètre (12) à roues phoniques et à dents non entrelacées et dans lequel ladite unité de traitement déclenche en outre une réduction de débit en cas de détection d'une différence de vitesse entre les deux roues phoniques.

## Patentansprüche

1. Gasturbinentriebwerk, umfassend einen Gasgenerator, der mindestens einen Kompressor (1), eine Brennkammer (3), mindestens eine verbundene Turbine (4) und ein System zum Regeln des Kraftstoffes, der in die Brennkammer eingespritzt wird, aufweist, wobei das Turbinentriebwerk ferner eine Freiturbine, wobei die Gase, die aus dem Gasgenerator kommen, der Freiturbine (6) zugeführt werden, und eine Schutzvorrichtung gegen die Überdrehzahl der Freiturbine (6) aufweist, wobei die Vorrichtung mindestens ein Mittel zur Drehmomentmessung (12), das durch eine Abtriebswelle (8, 11) gestützt ist, die mechanisch mit der Freiturbine verbunden ist, und eine Signalverarbeitungseinheit aufweist, die konfiguriert ist, um einen Befehl zur Verringerung des Durchflusses des Kraftstoffs, der in das Steuersystem des Gasturbinentriebwerks eingespritzt wird, zu übermitteln, **dadurch gekennzeichnet, dass** die Signalverarbeitungseinheit konfiguriert ist, um einen Befehl zur Verringerung des Kraftstoffdurchflusses im Falle des Erfassens eines Drehmomentabfalls unter einen ersten Sollwert zu übertragen, wobei das Mittel zur Drehmomentmessung konfiguriert ist, um die Messung des Drehmoments durchzuführen, die zur Auslösung der Verringerung bei einer Drehung verwendet wird, die einem Bruchteil einer Umdrehung der Abtriebswelle (8, 11) entspricht.

2. Gasturbinentriebwerk nach Anspruch 1, wobei das Mittel zur Messung ein Drehmomentmesser mit phonischen Rädern (12) ist, wobei der Bruchteil einer Umdrehung durch den Bereich zwischen zwei aufeinanderfolgenden Zähnen von einem der zwei phonischen Räder definiert ist.

3. Gasturbinentriebwerk nach einem der Ansprüche 1 oder 2, wobei die Messung des Drehmoments auf jedem neuen Bruchteil einer Umdrehung aktualisiert wird.

4. Gasturbinentriebwerk nach Anspruch 3, wobei die Verringerung des Durchsatzes nur ausgelöst wird, wenn der Wert des Drehmoments in einem ersten vorbestimmten Zeitintervall unter einen ersten Sollwert fällt.

5. Gasturbinentriebwerk nach Anspruch 4, wobei das erste Zeitintervall kleiner als oder gleich 5 ms ist.

6. Gasturbinentriebwerk nach einem der Ansprüche 3 bis 5, wobei die Verarbeitungseinheit die Verringerung des Durchsatzes nur ausgelöst, wenn die gemessene Leistung im Wesentlichen größer als oder gleich 50 % der Maximalleistung beim Abheben ist.

7. Gasturbinentriebwerk nach Anspruch 1, wobei das Mittel zur Messung einen Drehmomentmesser mit phonischen Rädern (12) und mit Zähnen, die sich nicht überlappen, aufweist, und wobei die Verarbeitungseinheit ferner eine Verringerung des Durchsatzes im Fall des Erfassens eines Geschwindigkeitsunterschied zwischen den zwei phonischen Rädern auslöst.

## Claims

1. Turboshaft engine comprising a gas generator including at least one compressor (1), a combustion chamber (3), at least one connected turbine (4) and a system for regulating fuel injected into the said combustion chamber, the turboshaft engine including in addition a free turbine, the gases exiting the said generator being passed to the said free turbine (6), and a device to protect the said free turbine (6) against overspeed, the said device comprising at least one means for measuring the torque (12) supported by an output shaft (8, 11) mechanically coupled to the said free turbine and a signal processing unit configured to transmit a command to reduce the flow rate of fuel injected into the regulation system of the turboshaft engine, **characterised in that** the signal processing unit is configured to transmit a command to reduce the flow rate of fuel if a fall in the torque below a first predetermined value is detected, the said measurement means being configured to perform the measurement of the torque used to trigger the said reduction during a rotation corresponding to a fraction of a turn of the said output shaft (8, 11).

2. Turboshaft engine according to claim 1, in which the measurement means is a torque meter with phonic wheels (12), the fraction of a turn being defined by the sector contained between two consecutive teeth of one of the two said phonic wheels.

3. Turboshaft engine according to one of claims 1 or 2, in which the said measurement of the torque is updated at each new fraction of a turn.

4. Turboshaft engine according to claim 3, in which the reduction of the flow rate is triggered only if the torque value falls below a first value specified in a first predefined time interval.

5. Turboshaft engine according to claim 4, in which the first time interval is less than or equal to 5 msec.

6. Turboshaft engine according to one of claims 3 to 5, in which the said processing unit triggers the said reduction of the flow rate only if the measured power is greater than or equal to substantially 50% of the maximum power on take-off.

7. Turboshaft engine according to claim 1, in which the torque measurement means comprises a torque meter (12) with phonic wheels and with non-engaging teeth, and in which the said processing unit in addition triggers a reduction in the flow rate if a difference of speed between the two phonic wheels is detected.
